# EUROPEAN PATENT SPECIFICATION

(11) **EP 3 219 858 B1**
(45) Date of publication and mention of the grant of the patent: **24.05.2023**
(21) Application number: 16002646.4
(22) Date of filing: 13.12.2016
(51) Int. Cl.: E03C 1/042, E03C 1/04

(54) **A TEMPERATURE CONTROLLING TAP**
TEMPERATURREGELNDER HAHN
ROBINET À TEMPÉRATURE RÉGLABLE

(30) Priority: 18.03.2016 CN 201610157162
(43) Date of publication of application: 20.09.2017
(73) Proprietor: Xiamen Solex High-Tech Industries Co., Ltd., Xiamen Area of China (Fujian) Pilot Free Trade Zone (CN)
(72) Inventor: Huang, Changzhi, Xiamen, Fujian 361000 (CN); Ruan, Xiaofeng, Xiamen, Fujian 361000 (CN); Wu, Yuzhi, Xiamen, Fujian 361000 (CN)
(74) Representative: Verscht, Thomas Kurt Albert

(56) References cited:
- EP-A1- 0 647 808
- EP-A1- 2 182 122
- EP-A2- 2 388 676
- CN-U- 204 099 709
- US-A1- 2013 241 196

## Description

### Field of the invention

The present invention relates to a temperature controllable tap.

### Background of the invention

Traditional temperature controllable tap comprises a tap portion, two joint portions, an outlet portion, a water temperature adjusting mechanism and a flow regulating mechanism. Two joint portions are respectively fixedly assembled to and connected to a hot water resource and a cool water resource, two ends of the tap portion are respectively connected to the water temperature adjusting mechanism and the flow regulating mechanism; the tap portion is disposed with a first waterway and a mixing waterway, the first waterway is connected to one joint portion, the mixing waterway connects the first waterway and the other joint portion and it is coupled to the water temperature adjusting mechanism to adjust the water temperature, the outlet portion is connected to the mixing waterway and the flow regulating mechanism is coupled to the mixing waterway to control the volume. The tap portion is made of metal, to guarantee the water quality, the metal is copper, which costs high, and the molds are complicated and the manufacturing cost is high.

To solve above disadvantage, a temperature controllable tap according to claim 1 is provided.

From EP 2 182 122 A1 a tap according to the preamble of claim 1 is known which comprises a housing in which a first insert and a second insert is inserted. The two inserts may be connected by two tube elements to each other.

From US 2013/241 196 A1 a sanitary fitting is known comprising a connector region having at least two connectors for connection to in each case one water line, at least one receptacle for a valve device, a connector for an outlet from the sanitary fitting, and ducts between the connectors, the valve device and the outlet, which ducts are formed in the fitting main body.

From EP 0 647 808 A1 a hot and cold water mixing device is known which comprises one or more valve units each constituted by accommodating an operating member within a hollow casing, and a housing into which one or more valve units are inserted and arranged and in which two primary water passages communicating with a hot water supply source and a cold water supply source, respectively, are formed.

From EP 2 388 676 A2 an anti-scald thermostatic water tap is known, comprising a valve body, a flow valve core, a thermostatic valve core, a temperature control handwheel and a flow handwheel; the flow valve core being connected with the flow handwheel; the thermostatic valve core being connected with the temperature control handwheel; the valve body being equipped with a cold water inlet, a hot water inlet and a water outlet.

### Summary of the invention

The present invention relates to a controllable temperature tap as defined in claim 1.

Preferred embodiments of the invention are disclosed in the dependent claims.

Compared to the conventional technology, the technical proposal of the present invention has advantages as follows:
The waterway portion of the temperature controllable tap is totally disposed at the core portion and it connects the two joint portions and the outlet portion, the core portion separates the waterway portion and the housing, on one hand, the housing doesn't contact with the waterway, the material is not limited to copper, the housing can be electroplated, the entire price is cheaper than the traditional tap; on the other hand, the thermal conduction between the housing and the waterway is cut off by the core portion, the housing is influenced less by the water temperature, therefore it doesn't scald the user, security is higher.

The waterway portion comprises a first waterway and a mixing waterway, the first waterway is connected to one joint portion, the mixing waterway connects the first waterway and the other joint portion and it is coupled to the water temperature adjusting mechanism to adjust the water temperature, the outlet portion is connected to the mixing waterway and the flow regulating mechanism is coupled to the mixing waterway to control the volume, the waterway structure is simple, the core portion has simple structure.

The core portion comprises a first valve base and a second valve base; the first valve base and the second valve base are fixedly assembled to form above mention first waterway and the mixing waterway, the water temperature adjusting mechanism is movably connected to the second valve base, the flow regulating mechanism is assembled to the first valve base, the structure is compact, the assembly is simple.

The first waterway and the mixing waterway have one portion disposed at the first valve base and one portion disposed at the second valve base, the arrangement is reasonable, the structure is simple.

### Brief description of the drawings

The present invention will be further described with the drawings and the embodiments.
FIG.1 illustrates a schematic diagram of the temperature controllable tap.
FIG.2 illustrates a sectional diagram of the temperature controllable tap.
FIG. 3 illustrates a sectional diagram of the temperature controllable tap in another view angle.
FIG.4 illustrates a sectional diagram of FIG.3 in A-A.
FIG.5 illustrates an exploded and schematic diagram of the temperature controllable tap.
FIG.6 illustrates a schematic diagram of the first valve base and the second valve base of the temperature controllable tap when they are coupled.
FIG. 7 illustrates a schematic diagram of the first valve base and the second valve base of the temperature controllable tap when they are separated.

### Detailed description of the embodiment

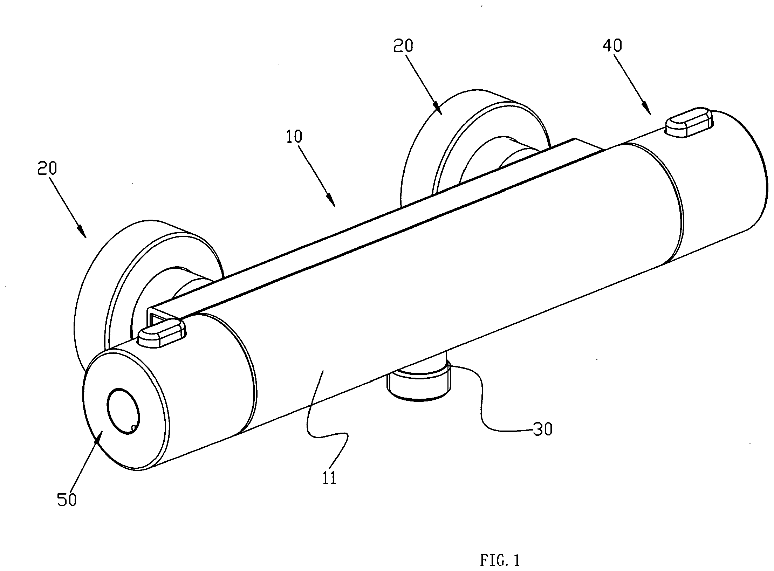

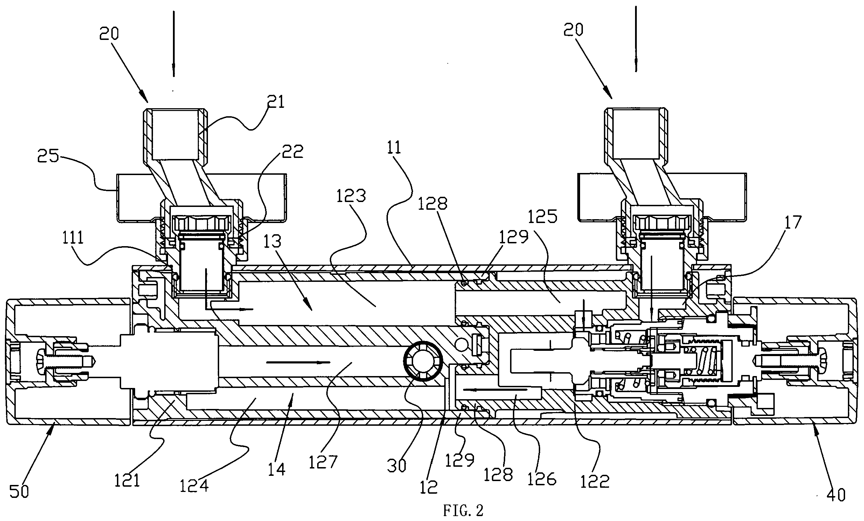

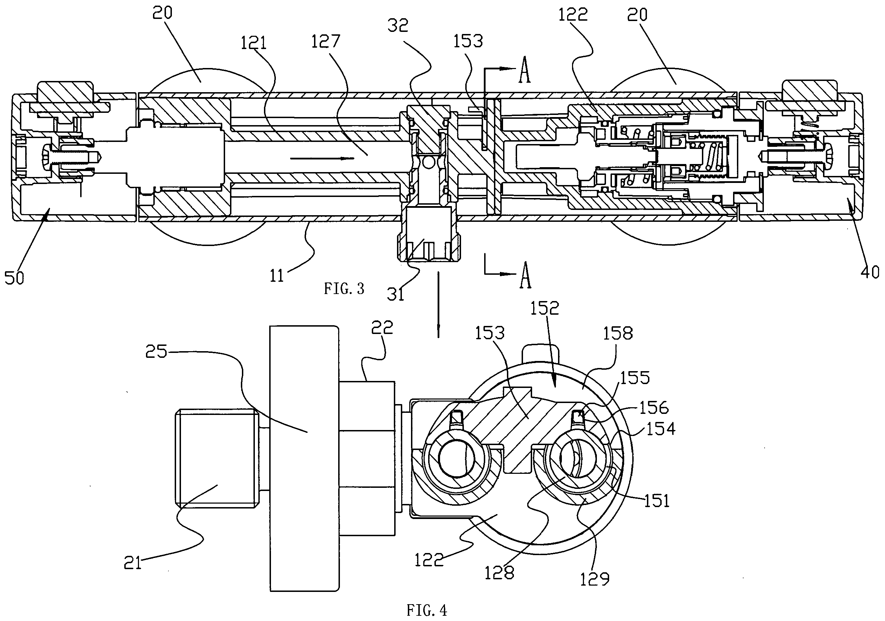

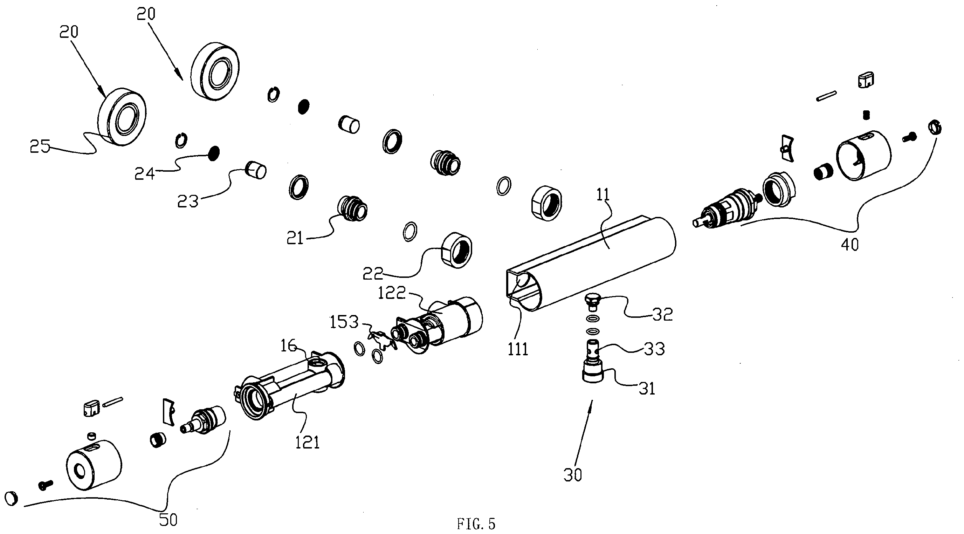

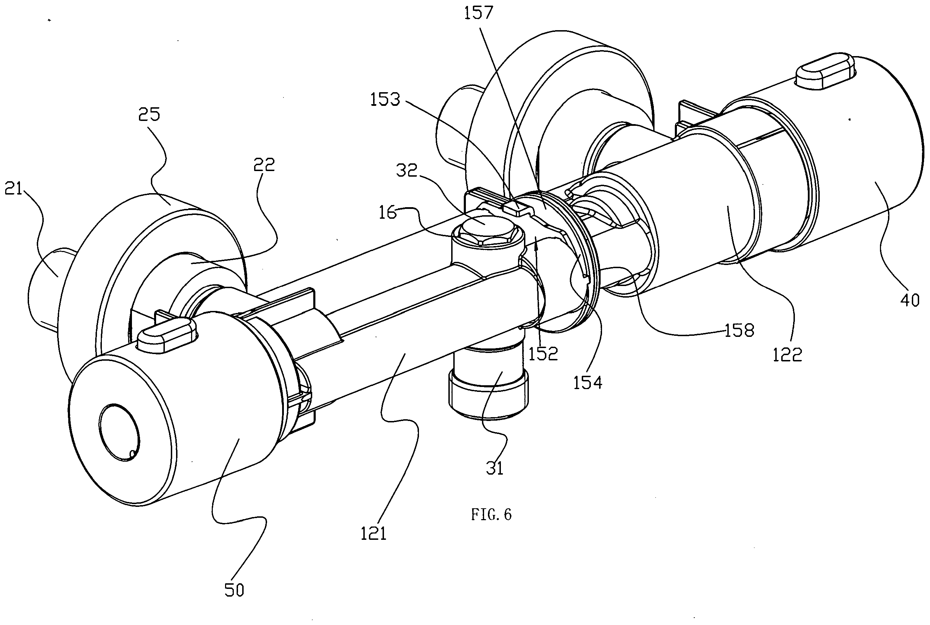

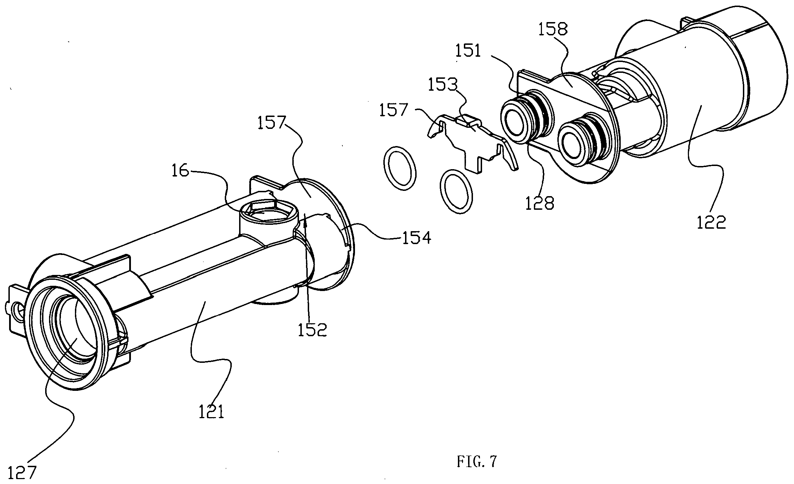

Please referring to FIGs 1-7, the temperature controllable tap comprises a tap portion 10 with a waterway portion, two joint portions 2 respectively fixedly assembled to and connected to a hot water resource and a cool water resource, an outlet portion 30, a water temperature adjusting mechanism 40 and a flow regulating mechanism 50.

The tap portion 10 comprises a housing 11 and a core portion 12 of plastic fixedly assembled in the housing 11, the housing can be made of metal, the waterway portion is entirely disposed in the core portion 12, the core portion 12 separates the waterway portion and the housing 11, so that the water flowing in the waterway portion would not be influenced by the material of the housing, the housing is not needed to be made of copper. Two joint portions 20 are fixedly connected to the tap portion 10, when assembled, two joint portions 2 are respectively fixedly assembled to and connected to a hot water resource and a cool water resource, so that the waterway portion is connected to the hot water resource and the cool water resource. The outlet portion 30 is fixedly connected to the tap portion 10 to connect to the waterway portion. The waterway portion connects the two joint portions 20 and the outlet portion 30. The water temperature adjusting mechanism 40 and the flow regulating mechanism 50 are applied with existing technology, they are respectively assembled to the two ends of the core portion 12, the water temperature adjusting mechanism 40 and the flow regulating mechanism 50 are coupled to the waterway portion to respectively achieve flow regulating and temperature adjusting.

Two joint portions 20 can be referred to existing technology. The housing 11 is disposed with two assembly holes 111 passing through inside and outside, the joint portion 20 comprises a joint 21, the joint 21 passes through the assembly hole 111 to be fixedly assembled to the core portion to connect to the waterway portion. The joint portion 20 further comprises an assembly nut 22, the nut 22 is threaded to the joint 21 at the portion outside the housing, the nut 22 is fixedly connected to the water resource. Preferred, the joint portion 20 is disposed with a non-return valve 23, a filter screen 24 and a flange cover 25.

The waterway portion comprises a first waterway 13, a mixing waterway 14 and a second waterway 17, the first waterway 13 is connected to one joint portion 20, the mixing waterway 14 is used to connect to the first waterway 13, the mixing waterway 14 is connected to the other joint portion 20 by the second waterway 17, the mixing waterway is coupled to the water temperature adjusting mechanism 40 to adjust the water temperature, the outlet portion 30 is connected to the mixing waterway 14 and the flow regulating mechanism 50 is coupled to the mixing waterway 14 to control the volume.

Preferred, the core portion 12 comprises a first valve base 121 and a second valve base 122; the first waterway 13 has a portion disposed in the first valve base 121 and a portion disposed in the second valve base 122, the mixing waterway 14 has a portion disposed in the first valve base 121 and a portion disposed in the second valve base 122; the first valve base 121 and the second valve base 122 are fixedly assembled together to make two portions of the first waterway 13 form the first waterway 13 and to make two portions of the mixing waterway 14 form the mixing waterway 14; the water temperature adjusting mechanism 40 is movably assembled to the second valve base 122, the flow regulating mechanism 50 is assembled to the first valve base 121. In detailed:
The first valve base 121 is disposed with a first water passage 123 and a third water passage 124, the first water passage 123 forms the portion of the first waterway 13 disposed in the first valve base 121, the third water passage 124 forms the portion of the mixing waterway 14 disposed in the first valve base 121; the periphery surface of the first valve base 121 is concaved with a fourth connecting way connected to the first water passage, the joint portion 20 is fixedly assembled to the fourth connecting way, so that the first water passage 123 is connected to the joint portion 20. Furthermore, in detailed, the first water passage 123 is a blind hole concaved on the coupling end of the first valve base, the blind hole is disposed with the fourth connecting way connected to the periphery surface of the first valve base 121; the third water passage 124 comprises a connecting waterway connected to the fourth water passage 126 and an outlet passage 127, the first water passage 123 is a blind hole concaved at the external end of the first valve base; the first water passage 123, the connecting waterway and the outlet passage 127 are parallel disposed, a third connecting way is disposed between the outlet passage 127 and the connecting waterway to connect the two, the outlet portion 30 is connected to the blind end of the outlet passage 127 to connect to the third water passage 124, the flow regulating mechanism 50 is assembled to the outlet passage 127and coupled to the third connecting way to control the volume, the volume control comprises on and off.

The second valve base 122 is disposed with a second water passage 125 and a fourth water passage 126, the second water passage 125 forms the portion of the mixing waterway 14 disposed at the second valve base 122, the fourth water passage 126 forms the portion of the mixing waterway 14 disposed at the second valve base 122; a first connecting way is disposed between the fourth water passage 126 and the second water passage 125 to connect the two water passages, a second connecting way is disposed at the fourth water passage 126 to pass through the second valve base 122, the other joint portion 20 can be connected to the second connecting way, the second connecting way forms the second waterway 17 or a portion of the second waterway 17, the second connecting way connects the other joint portion 20 and the fourth water passage 126. The water temperature adjusting mechanism 40 is assembled to the fourth water passage 126 and is coupled to the first connecting way and the second connecting way to adjust the water temperature, in detailed, the second water passage 125 is a blind hole concaved at the coupling end of the second valve base 122, the fourth water passage 126 passes through the second valve base 122, the second water passage 125 and the fourth water passage 126 are parallel, the periphery surface of the second valve base 122 is concaved with a second connecting way connected to the fourth water passage 126, the first connecting way and the second connecting way are disposed with space along the fourth water passage 126, the water temperature adjusting mechanism 40 is assembled to the fourth water passage 126 corresponding to the external end of the second valve base to couple to the first connecting way and the second connecting way, the section area of the first connecting way and the second waterway are controlled to adjust the water temperature.

The first valve base 121 is fixedly assembled to the second valve base 122, the coupling end of the first valve base is faced to the coupling end of the second valve base, the first water passage 123 is connected to the second water passage 125 to form the first waterway 13, the third water passage 124 is connected to the fourth water passage 126 to form the mixing waterway 14.

The first valve base 121 and the second valve base 122 are fixedly assembled in this way:
The end of the first water passage 123 and the end of the third water passage 124 are connected to the coupling end of the first valve base 121, the end of the second water passage 125 and the end of the fourth water passage 126 are connected to the coupling end of the second valve base 122, the end of the second water passage 125 and the end of the fourth water passage 126 are respectively extending outwardly to form an insert pipe 128, the coupling end of the first valve base 121 and the coupling end of the second valve base 122 are assembled together, two insert pipes are respectively inserted to the joint passage of the first water passage 123 and the third water passage 124 to achieve connection. The external wall of the insert pipe is concaved with an annular groove 151; the coupling end of the first valve base 121 is disposed with an insert hole 152, the end of the first water passage 123 and the end of the third water passage 124 are respectively extending outwardly to form an inserted pipe 129, the end of the inserted pipe 129, the end of the inserted pipe is disposed with a notch 154 passing through inside and outside, the notch 154 forms an insert hole 152 or a portion of the insert hole 152, the insert pipe is inserted to the inserted pipe to achieve waterway connection, the annular groove 151 and the notch 154 are aligned; a lock element 153 is further configured, two sides of the lock element 153 respectively pass through the notches 154 of the two inserted pipe and insert to the annular groove 151, the lock element 153 limits the separating of the first valve base 121 and the second valve base 122, the first valve base 121 is detachably connected to the second valve base 122 by the lock element 153. Preferred, the lock element 153 is disposed with a position groove 156 symmetrical to a position element 155, the position groove is coupled to the position element, as needed, the prior two components can be locked to each other for positioning and assembling; the external wall of the end of the inserted pipes of the first valve base 121 are connected to form a first plate 157, the rear side of the first plate 157 is aligned with the side surface of the notch, so that the lock element can be inserted from the rear side of the first plate 157, it is convenient to assemble; the external wall of the insert pipes of the first valve base 121 are connected to form a second plate 158, when the front surface of the first plate and the front surface of the second plate are face to face to contact with each other, the notch is aligned with the annular groove. As needed, other fixing way are available, for example, the first valve base is fixedly connected to the second valve base by injection molding, the first valve base and the second valve base are once formed that it is convenient for further assembling, other traditional fixing way, such as bolt, lock catch, welding or gluing, are available, it should be noted that they are within the scope of this application.

The outlet portion 30 is assembled to the first valve base, in detailed, the first valve base is disposed with an assembly hole 16 passing through the first valve base, the assembly hole is connected to the outlet passage, the outlet portion comprises an outlet pipe 31, the outlet pipe 31 is assembled to one end of the assembly hole in sealing way, the other end of the assembly hole is disposed with a sealing plug 32, the outlet pipe 31 is disposed with a water hole 33 connected to an internal hole, the outlet pipe 31 is threaded to the sealing plug 32, the end of the assembly hole 16 at the rear side is disposed with step surface facing outwardly, the sealing plug 32 is contacted with the step surface, the sealing plug is contacted with the step surface by the threaded connection of the outlet pipe and the sealing plug, so that the outlet pipe, the sealing plug and the first valve base are detachably assembled, the waterway is from the outlet passage, the water hole, to the internal hole of the outlet pipe.

The invention may be summarized as follows: The present invention is provided with a temperature controllable tap, which comprises a tap portion with a waterway portion, two joint portions respectively fixedly assembled to and connected to a hot water resource and a cool water resource, an outlet portion, a water temperature adjusting mechanism and a flow regulating mechanism, two joint portions are fixedly connected to the tap portion, the water temperature adjusting mechanism and the flow regulating mechanism are coupled to the waterway portion to realize flow regulating and water temperature adjusting, the tap portion comprises a housing and a core portion of plastic fixedly assembled in the housing, wherein the waterway portion is entirely disposed in the core portion and the waterway portion connects the two joint portions and the outlet portion, the core portion separates the waterway portion and the housing. The present invention has advantages that the housing is not contacted with the waterway, the material of the housing is not limited; the housing is influenced less by the water temperature, it would not scald the user that it has higher security. Although the present invention has been described with reference to the preferred embodiments thereof for carrying out the patent for invention, it is apparent to those skilled in the art that a variety of modifications and changes may be made without departing from the scope of the patent for invention which is intended to be defined by the appended claims.

## Claims

1. A controllable temperature tap, comprising a tap portion (10) with a waterway portion, two joint portions (20) respectively fixedly assembled to and connected to a hot water resource and a cool water resource, an outlet portion (30), a water temperature adjusting mechanism (40) and a flow regulating mechanism (50); the two joint portions (20) are fixedly connected to the tap portion (10), the water temperature adjusting mechanism (40) and the flow regulating mechanism (50) are coupled to the waterway portion to realize flow regulating and water temperature adjusting, the tap portion (10) comprises a housing (11) and a plastic core portion (12) fixedly assembled in the housing (11), wherein the waterway portion is entirely disposed in the core portion (12) and the waterway portion connects the two joint portions (20) and the outlet portion (30); the core portion (12) separates the waterway portion and the housing (11),
wherein the waterway portion comprises a first waterway (13) and a mixing waterway (14), the first waterway (13) is connected to one joint portion (20), the mixing waterway (14) is used to connect the first waterway (13) and the other joint portion (20) and it is coupled to the water temperature adjusting mechanism (40) to adjust the water temperature, the outlet portion (30) is connected to the mixing waterway (14) and the flow regulating mechanism (50) is coupled to the mixing waterway (14) to control the volume,
wherein the core portion (12) comprises a first valve base (121) and a second valve base (122), the first valve base (121) and the second valve base (122) are fixedly assembled together to form the first waterway (13) and the mixing waterway (14), the water temperature adjusting mechanism (40) is movably assembled to the second valve base (122), the flow regulating mechanism (50) is assembled to the first valve base (121), wherein
the first valve base (121) is disposed with a first water passage (123) and a third water passage (124), the first water passage (123) is connected to one joint portion (20);
the second valve base (122) is disposed with a second water passage (125) and a fourth water passage (126), a first connecting way is disposed between the fourth water passage (126) and the second water passage (125) to connect the fourth water passage (126) and the second water passage (125), a second connecting way is disposed between the fourth water passage (126) and the other joint portion (20) to connect the fourth water passage (126) and the other joint portion (20); the water temperature adjusting mechanism (40) is assembled to the fourth water passage (126) and coupled to the first connecting way and the second connecting way to adjust the water temperature;
the first water passage (123) is connected to the second water passage (125) to form the first waterway (13), the third water passage (124) is connected to the fourth passage (126) to form the mixing waterway (14);
the flow regulating mechanism (50) is coupled to the third water passage (124) to control the volume, the outlet portion (30) is connected to the third water passage (124), wherein
the end of the first water passage (123) and the end of the third water passage (124) are connected to a coupling end of the first valve base (121), the end of the second water passage (125) and the end of the fourth water passage (126) are connected to a coupling end of the second valve base (122), the coupling end of the first valve base (121) and the coupling end of the second valve base (122) are assembled together, the end of the first water passage (123) and the end of the third water passage (124), the end of the second water passage (125) and the end of the fourth water passage (126) are respectively connected in inserting way, and wherein
the end of the second water passage (125) and the end of the fourth water passage (126) of the second valve base (122) are respectively extending outwardly to respectively form an insert pipe; the two insert pipes are respectively inserted to the first water passage (123) and the third water passage (124) to realize connection; the outer walls of the two insert pipes are respectively concaved with an annular groove (151);
**characterized in that**
the coupling end of the first valve base (121) is disposed with an insert hole (152), a lock element (153) is further provided to insert to the insert hole (152) such that two sides of the lock element (153) are respectively locked to the annular grooves (151) of the two insert pipes, the first valve base (121) is detachably connected to the second valve base (122) by the lock element (153).

2. The controllable temperature tap according to claim 1, wherein the water temperature adjusting mechanism (40) and the flow regulating mechanism (50) are respectively assembled to two ends of the core portion (12).

3. The controllable temperature tap according to claim 1, wherein:
the first waterway (13) comprises a portion disposed in the first valve base (121) and a portion disposed in the second valve base (122), the first valve base (121) and the second valve base (122) are fixedly assembled to make the two portions form the first waterway (13);
the mixing waterway (14) comprises a portion disposed in the first valve base (121) and a portion disposed in the second valve base (122), the first valve base (121) and the second valve base (122) are fixedly assembled to make the two portions form the mixing waterway (14).

4. The controllable temperature tap according to claim 3, wherein the portion of the mixing waterway (14) disposed in the first valve base (121) comprises a connecting waterway connected to the fourth water passage (126) and an outlet passage (127), a third connecting way is disposed between the outlet passage (127) and the connecting waterway to connect the outlet passage (127) and the connecting waterway, the outlet portion (30) is connected to the outlet passage (127), the flow regulating mechanism (50) is assembled to the outlet passage (127) to couple to the third connecting way to control the volume.

5. The controllable temperature tap according to claim 1, wherein the end of the first water passage (123) and the end of the third water passage (124) are respectively extending outwardly to form an inserted pipe, the end of the insert pipe is disposed with a notch (154) passing through inside and outside, the notch (154) forms the insert hole (152) or a portion of the insert hole (152), the insert pipe is inserted to the inserted pipe, the annular groove (151) is aligned with the notch (154), two sides of the lock element (153) respectively pass through the notches (154) of the two inserted pipes and insert to the annular grooves (151), the first valve base (121) and the second valve base (122) are limited to separate by the lock element (153).

## Patentansprüche

1. Ein temperatursteuerbarer Hahn, der einen Hahnteil (10) mit einem Wasserwegteil, zwei Verbindungsteile (20), die jeweils fest mit einer Heißwasserquelle und einer Kaltwasserquelle zusammengebaut und mit diesen verbunden sind, einen Auslassteil (30), einen Wassertemperatureinstellmechanismus (40) und einen Strömungsreguliermechanismus (50) aufweist; die zwei Verbindungsteile (20) sind fest mit dem Hahnteil (10) verbunden, der Wassertemperatureinstellmechanismus (40) und der Strömungsreguliermechanismus (50) sind mit dem Wasserwegteil gekuppelt, um eine Strömungsregulierung und eine Wassertemperatureinstellung zu realisieren, der Hahnteil (10) weist ein Gehäuse (11) und einen Kunststoffkernteil (12), der fest in dem Gehäuse (11) zusammengebaut ist, auf, wobei der Wasserwegteil vollständig in dem Kernteil (12) angeordnet ist, und der Wasserwegteil verbindet die zwei Verbindungsteile (20) und den Auslassteil (30); der Kernteil (12) trennt den Wasserwegteil und das Gehäuse (11),
wobei der Wasserwegteil einen ersten Wasserweg (13) und einen Mischwasserweg (14) aufweist, der erste Wasserweg (13) ist mit einem Verbindungsteil (20) verbunden, der Mischwasserweg (14) wird verwendet, um den ersten Wasserweg (13) und den anderen Verbindungsteil (20) zu verbinden, und er ist mit dem Wassertemperatureinstellmechanismus (40) gekuppelt, um die Wassertemperatur einzustellen, der Auslassteil (30) ist mit dem Mischwasserweg (14) verbunden und der Strömungsreguliermechanismus (50) ist mit dem Mischwasserweg (14) gekuppelt, um das Volumen zu steuern,
wobei der Kernteil (12) eine erste Ventilbasis (121) und eine zweite Ventilbasis (122) aufweist, die erste Ventilbasis (121) und die zweite Ventilbasis (122) sind fest miteinander zusammengebaut, um den ersten Wasserweg (13) und den Mischwasserweg (14) zu bilden, der Wassertemperatureinstellmechanismus (40) ist bewegbar an der zweiten Ventilbasis (122) zusammengebaut, der Strömungsreguliermechanismus (50) ist an der ersten Ventilbasis (121) zusammengebaut, wobei
die erste Ventilbasis (121) mit einem ersten Wasserdurchlass (123) und einem dritten Wasserdurchlass (124) angeordnet ist, der erste Wasserdurchlass (123) ist mit einem Verbindungsteil (20) verbunden;
die zweite Ventilbasis (122) ist mit einem zweiten Wasserdurchlass (125) und einem vierten Wasserdurchlass (126) angeordnet, ein erster Verbindungsweg ist zwischen dem vierten Wasserdurchlass (126) und dem zweiten Wasserdurchlass (125) angeordnet, um den vierten Wasserdurchlass (126) und den zweiten Wasserdurchlass (125) zu verbinden, ein zweiter Verbindungsweg ist zwischen dem vierten Wasserdurchlass (126) und den anderen Verbindungsteil (20) angeordnet, um den vierten Wasserdurchlass (126) und den anderen Verbindungsteil (20) zu verbinden; der Wassertemperatureinstellmechanismus (40) ist mit dem vierten Wasserdurchlass (126) zusammengebaut und mit dem ersten Verbindungsweg und dem zweiten Verbindungsweg gekuppelt, um die Wassertemperatur einzustellen;
der erste Wasserdurchlass (123) ist mit dem zweiten Wasserdurchlass verbunden (125), um den ersten Wasserweg (13) zu bilden, der dritte Wasserdurchlass (124) ist mit dem vierten Durchlass (126) verbunden, um den Mischwasserweg (14) zu bilden;
der Strömungsreguliermechanismus (50) ist mit dem dritten Wasserdurchlass (124) gekuppelt, um das Volumen zu steuern, der Auslassteil (30) ist mit dem dritten Wasserdurchlass (124) verbunden, wobei
das Ende des ersten Wasserdurchlasses (123) und das Ende des dritten Wasserdurchlasses (124) mit einem Kupplungsende der ersten Ventilbasis (121) verbunden sind, das Ende des zweiten Wasserdurchlasses (125) und das Ende des vierten Wasserdurchlasses (126) sind mit einem Kupplungsende der zweiten Ventilbasis (122) verbunden, das Kupplungsende der ersten Ventilbasis (121) und das Kupplungsende der zweiten Ventilbasis (122) sind miteinander zusammengebaut, das Ende des ersten Wasserdurchlasses (123) und das Ende des dritten Wasserdurchlasses (124), das Ende des zweiten Wasserdurchlasses (125) und das Ende des vierten Wasserdurchlasses (126) sind jeweils in einsetzender Weise verbunden, und wobei das Ende des zweiten Wasserdurchlasses (125) und das Ende des vierten Wasserdurchlasses (126) der zweiten Ventilbasis (122) sich jeweils nach außen hin erstrecken, um jeweils ein Einsetzrohr zu bilden; die zwei Einsetzrohre sind jeweils in den ersten Wasserdurchlass (123) und den dritten Wasserdurchlass (124) eingesetzt, um eine Verbindung zu realisieren;
die Außenwände der zwei Einsetzrohre sind jeweils konkav gemacht, und zwar mit einer Ringnut (151);
**dadurch gekennzeichnet, dass**
das Kupplungsende der ersten Ventilbasis (121) mit einem Einsetzloch (152) angeordnet ist, ein Verriegelungselement (153) ist ferner zum Einsetzen in das Einsetzloch (152) derart vorgesehen, dass zwei Seiten des Verriegelungselements (153) jeweils mit den Ringnuten (151) der zwei Einsatzrohre verriegelt sind, die erste Ventilbasis (121) ist lösbar mit der zweiten Ventilbasis (122) durch das Verriegelungselement (153) verbunden.

2. Der temperatursteuerbare Hahn nach Anspruch 1, wobei der Wassertemperatureinstellmechanismus (40) und der Strömungsreguliermechanismus (50) jeweils mit zwei Enden des Kernteils (12) zusammengebaut sind.

3. Der temperatursteuerbare Hahn nach Anspruch 1, wobei:
der erste Wasserweg (13) einen Teil, der in der ersten Ventilbasis (121) angeordnet ist, und einen Teil, der in der zweiten Ventilbasis (122) angeordnet ist, aufweist, die erste Ventilbasis (121) und die zweite Ventilbasis (122) sind fest zusammengebaut, um die zwei Teile den ersten Wasserweg (13) bilden zu lassen;
der Mischwasserweg (14) einen Teil, der in der ersten Ventilbasis (121) angeordnet ist, und einen Teil, der in der zweiten Ventilbasis (122) angeordnet ist, aufweist, die erste Ventilbasis (121) und die zweite Ventilbasis (122) sind fest zusammengebaut, um die zwei Teile den Mischwasserweg (14) bilden zu lassen.

4. Der temperatursteuerbare Hahn nach Anspruch 3, wobei der Teil des Mischwasserwegs (14), der in der ersten Ventilbasis (121) angeordnet ist, einen Verbindungswasserweg aufweist, der mit dem vierten Wasserdurchlass (126) und einem Auslassdurchlass (127) verbunden ist, ein dritter Verbindungsweg ist zwischen dem Auslassdurchlass (127) und dem Verbindungswasserweg angeordnet, um den Auslassdurchlass (127) und den Verbindungswasserweg zu verbinden, der Auslassteil (30) ist mit dem Auslassdurchlass (127) verbunden, der Strömungsreguliermechanismus (50) ist an dem Auslassdurchlass (127) zusammengebaut, um mit dem dritten Verbindungsweg gekuppelt zu werden, um das Volumen zu steuern.

5. Der temperatursteuerbare Hahn nach Anspruch 1, wobei das Ende des ersten Wasserdurchlasses (123) und das Ende des dritten Wasserdurchlasses (124) sich jeweils nach außen heraus erstrecken, um ein eingesetztes Rohr zu bilden, das Ende des Einsetzrohrs ist mit einer Kerbe (154), die innen und außen durchgeht, angeordnet, die Kerbe (154) bildet das Einsetzloch (152) oder einen Teil des Einsetzlochs (152), das Einsetzrohr ist in das eingesetzte Rohr eingesetzt, die Ringnut (151) ist mit der Kerbe (154) ausgerichtet, zwei Seiten des Verriegelungselements (153) gehen jeweils durch die Kerben (154) der zwei eingesetzten Rohre durch und setzen sich in die Ringnuten (151) ein, die erste Ventilbasis (12) und die zweite Ventilbasis (122) sind begrenzt, um sich durch das Verriegelungselement (153) zu trennen.

## Revendications

1. Robinet à température contrôlable, comportant une partie de robinet (10) avec une partie de voie d'eau, deux parties de joint (20) respectivement assemblées fixement et reliées à une ressource d'eau chaude et une ressource d'eau froide, une partie de sortie (30), un mécanisme de réglage de température de l'eau (40) et un mécanisme de régulation de débit (50) ; les deux parties de joint (20) sont reliées fixement à la partie de robinet (10), le mécanisme de réglage de température de l'eau (40) et le mécanisme de régulation de débit (50) sont couplés à la partie de voie d'eau pour réaliser une régulation de débit et un ajustement de température de l'eau, la partie de robinet (10) comprend un boîtier (11) et une partie centrale en plastique (12) fixement assemblée dans le boîtier (11), dans lequel la partie de voie d'eau est entièrement disposée dans la partie centrale (12) et la partie de voie d'eau relie les deux parties de joint (20) et la partie de sortie (30) ; la partie centrale (12) sépare la partie de voie d'eau et le boîtier (11),
dans lequel la partie de voie d'eau comprend une première voie d'eau (13) et une voie d'eau de mélange (14), la première voie d'eau (13) est reliée à une partie de joint (20), la voie d'eau de mélange (14) est utilisée pour relier la première voie d'eau (13) et l'autre partie de joint (20) et elle est couplée au mécanisme de réglage de température de l'eau (40) pour ajuster la température de l'eau, la partie de sortie (30) est reliée à la voie d'eau de mélange (14) et le mécanisme de régulation de débit (50) est couplé à la voie d'eau de mélange (14) pour contrôler le volume,
dans lequel la partie centrale (12) comprend une première base de vanne (121) et une deuxième base de vanne (122), la première base de vanne (121) et la deuxième base de vanne (122) sont assemblées fixement l'une à l'autre pour former la première voie d'eau (13) et la voie d'eau de mélange (14), le mécanisme de réglage de température de l'eau (40) est assemblé de manière mobile à la deuxième base de vanne (122), le mécanisme de régulation de débit (50) est assemblé à la première base de vanne (121), dans lequel la première base de vanne (121) est disposée avec un premier passage d'eau (123) et un troisième passage d'eau (124), le premier passage d'eau (123) est relié à une partie de joint (20) ;
la deuxième base de vanne (122) est disposée avec un deuxième passage d'eau (125) et un quatrième passage d'eau (126), une première voie de liaison est disposée entre le quatrième passage d'eau (126) et le deuxième passage d'eau (125) pour relier le quatrième passage d'eau (126) et le deuxième passage d'eau (125), une deuxième voie de liaison est disposée entre le quatrième passage d'eau (126) et l'autre partie de joint (20) pour relier le quatrième passage d'eau (126) et l'autre partie de joint (20) ; le mécanisme de réglage de température de l'eau (40) est assemblé au quatrième passage d'eau (126) et couplé à la première voie de liaison et à la deuxième voie de liaison pour ajuster la température de l'eau ;
le premier passage d'eau (123) est relié au deuxième passage d'eau (125) pour former la première voie d'eau (13), le troisième passage d'eau (124) est relié au quatrième passage (126) pour former la voie d'eau de mélange (14) ;
le mécanisme de régulation de débit (50) est couplé au troisième passage d'eau (124) pour contrôler le volume, la partie de sortie (30) est reliée au troisième passage d'eau (124), dans lequel
l'extrémité du premier passage d'eau (123) et l'extrémité du troisième passage d'eau (124) sont reliées à une extrémité de couplage de la première base de vanne (121), l'extrémité du deuxième passage d'eau (125) et l'extrémité du quatrième passage d'eau (126) sont reliées à une extrémité de couplage de la deuxième base de vanne (122), l'extrémité de couplage de la première base de vanne (121) et l'extrémité de couplage de la deuxième base de vanne (122) sont assemblées l'une à l'autre, l'extrémité du premier passage d'eau (123) et l'extrémité du troisième passage d'eau (124), l'extrémité du deuxième passage d'eau (125) et l'extrémité du quatrième passage d'eau (126) sont reliées respectivement de manière insérable, et dans lequel
l'extrémité du deuxième passage d'eau (125) et l'extrémité du quatrième passage d'eau (126) de la deuxième base de vanne (122) s'étendent respectivement vers l'extérieur pour former respectivement un tuyau d'insertion ; les deux tuyaux d'insertion sont insérés respectivement dans le premier passage d'eau (123) et le troisième passage d'eau (124) pour réaliser une liaison ; les parois extérieures des deux tuyaux d'insertion sont rendues concaves avec une rainure annulaire (151) ;
**caractérisé en ce que**
l'extrémité de couplage de la première base de vanne (121) est disposée avec un trou d'insertion (152), un élément de verrouillage (153) est par ailleurs prévu pour être inséré dans le trou d'insertion (152) de telle sorte que deux côtés de l'élément de verrouillage (153) soient respectivement verrouillés sur les rainures annulaires (151) des deux tuyaux d'insertion, la première base de vanne (121) est reliée de manière amovible à la deuxième base de vanne (122) par l'élément de verrouillage (153).

2. Robinet à température contrôlable selon la revendication 1, dans lequel le mécanisme de réglage de température de l'eau (40) et le mécanisme de régulation de débit (50) sont assemblés respectivement à deux extrémités de la partie centrale (12).

3. Robinet à température contrôlable selon la revendication 1, dans lequel :
la première voie d'eau (13) comprend une partie disposée dans la première base de vanne (121) et une partie disposée dans la deuxième base de vanne (122), la première base de vanne (121) et la deuxième base de vanne (122) sont assemblées fixement pour que les deux parties forment la première voie d'eau (13) ;
la voie d'eau de mélange (14) comprend une partie disposée dans la première base de vanne (121) et une partie disposée dans la deuxième base de vanne (122), la première base de vanne (121) et la deuxième base de vanne (122) sont assemblées fixement pour que les deux parties forment la voie d'eau de mélange (14).

4. Robinet à température contrôlable selon la revendication 3, dans lequel la partie de la voie d'eau de mélange (14) disposée dans la première base de vanne (121) comprend une voie d'eau de liaison reliée au quatrième passage d'eau (126) et un passage de sortie (127), une troisième voie de liaison est disposée entre le passage de sortie (127) et la voie d'eau de liaison pour relier le passage de sortie (127) et la voie d'eau de liaison, la partie de sortie (30) est reliée au passage de sortie (127), le mécanisme de régulation de débit (50) est assemblé au passage de sortie (127) pour se coupler à la troisième voie de liaison pour contrôler le volume.

5. Robinet à température contrôlable selon la revendication 1, dans lequel l'extrémité du premier passage d'eau (123) et l'extrémité du troisième passage d'eau (124) s'étendent respectivement vers l'extérieur pour former un tuyau inséré ; l'extrémité du tuyau d'insertion est disposée avec une encoche (154) passant à travers l'intérieur et l'extérieur, l'encoche (154) forme le trou d'insertion (152) ou une partie du trou d'insertion (152), le tuyau d'insertion est inséré dans le tuyau inséré, la rainure annulaire (151) est alignée avec l'encoche (154), deux côtés de l'élément de verrouillage (153) passent respectivement à travers les encoches (154) des deux tuyaux insérés et s'insèrent dans les rainures annulaires (151), la première base de vanne (121) et la deuxième base de vanne (122) sont limitées pour être séparées par l'élément de verrouillage (153).
